# EUROPEAN PATENT SPECIFICATION

(11) **EP 1 386 379 B1**
(45) Date of publication and mention of the grant of the patent: **11.07.2007**
(21) Application number: 01935131.1
(22) Date of filing: 07.05.2001
(51) Int. Cl.: H02G 3/08, H01R 25/00

(54) **IMPROVED ELECTRICAL JUNCITON BOX**
VERBESSERTE ELEKTRISCHE VERTEILERDOSE
BOITE DE JONCTION ELECTRIQUE AMELIOREE

(43) Date of publication of application: 04.02.2004
(73) Proprietor: Cash, Ronald G., Littleton, CO 80127 (US)
(72) Inventor: Cash, Ronald G., Littleton, CO 80127 (US)
(74) Representative: Hirsz, Christopher Stanislaw
(86) International application number: PCT/US2001/014739
(87) International publication number: WO 2002/091537

(56) References cited:
- US-A- 3 038 141
- US-A- 5 239 129
- US-A- 5 663 525
- US-A- 5 675 194
- US-A- 5 762 525
- US-A- 5 853 302

## Description

### BACKGROUND OF THE INVENTION

### FIELD OF THE INVENTION

The present invention relates to residential and commercial electrical wiring systems and devices; and, more particularly, to an improved electrical junction box for electrically connecting an electrical receptacle device to an electrical wiring system.

### DESCRIPTION OF RELATED ART

State and federal building codes require that when a building is wired to provide electrical power therein, the wiring must be installed between the exterior and interior wall surfaces, beneath the floors, above the ceilings, and between the surfaces of interior walls. The electrical wiring is installed after the framing of the building is completed but before the walls are erected on either side of the frame. Where ever electrical outlets, ceiling fixtures, wall switches, or the like are desired within the building, an electrical junction box, usually made of plastic or similar non-conductive material for interior use or metal for some exterior applications, is mounted on a frame member and then connected to the wiring. When wall surfaces, such as drywall or plaster, are later installed, access to the junction boxes is achieved through appropriate openings cut into the wall surface. Thus, standard residential and commercial electrical systems comprise a plurality of electrical junction boxes, each of which provides electrical conduit or sheathed cable for connecting the wires of electrical receptacle devices, such as electrical outlets, switches, fixtures, or the like to the electrical wiring of the building. While conventional electrical systems and junction boxes function adequately and relatively safely, they admit a variety of interrelated limitations. Conventional electrical wiring involves connecting the circuit at a junction box by terminating the stripped wires at the electrical receptacle device such as an outlet, switch, light fixture, hard wired appliance or the like. Therefore, in order to complete the proper, flush-mounted wall installation of any electrical receptacle device, all of the many wires and connectors associated with connecting the particular electrical receptacle device to the electrical system must first be connected electrically to the device and then the device with the attached wires is mounted onto the junction box. If the power is not shut off while the electrical receptacle device is being connected to the electrical system, the installer may receive an electrical shock during the installation, because the junction box contains a plurality of open wires and wire connections that are easily accessible and therefore readily mis-connected by the novice installer, such as the homeowner attempting to install a simple light fixture or ceiling fan without the aid of a skilled electrician. Moreover, because the wires are usually crammed into the junction box very tightly, the wires are capable of short-circuiting and causing dangerous electrical fires.

Standard electrical practices create additional limitations associated with the fact that current electrical systems only permit switch control of fixtures and/or outlets when the particular fixtures and/or outlets are directly wired to the same junction box as the switch. In an effort to circumvent this disadvantage, multiple gang junction boxes have been developed for terminating several switches in a single location and thereby permitting comparatively convenient control of multiple fixtures or groups of fixtures. Further, since a building's electrical circuits cannot be tested fully until after the walls of a building are erected, electrical connectivity errors or problems related to proper switch control of particular outlets and fixtures are frequent, especially in the case of multi-way switches, where more than one switch controls a single fixture or group of fixtures. These errors are costly and time-consuming to correct, as they require that the relevant portion of the interior wall surface be removed and reconstructed after the electrical error has been found and repaired.

It therefore would be advantageous to have an electrical junction box that permits convenient and simplified installation and removal of electrical receptacle devices in a plug and play manner. It would also be advantageous to have an electrical junction box wherein electrical wires from a building's electrical system terminate at a set of terminal strips and lugs in a secure area of the box rather than directly on an electrical receptacle device connected to the junction box. It would be further advantageous to have a junction box that provides a pair of plug-and-play terminals into which electrical receptacle devices are readily and conveniently plugged for connection to a building's electrical system. It would also be advantageous to have a Junction box that provides a low voltage connector block adapted to provide for smart circuitry and a smart circuit communications path. It would also be advantageous to have a method for terminating and routing electrical wires such that full testing of the circuitry is possible prior to completion of the interior wall surfaces. It would also be advantageous to have a junction box that decreases the possibility of electrical shock. It would also be advantageous to have an electrical junction box that reduces the risk of electrical fire.

US Patent No. 5,762,525, describes an electrical wiring system comprising; a substantially rigid insulating casing; a plurality of insulating carriers in the insulating casing and a space formed adjacent to each insulating carrier; a first metal strip carried by the insulating carrier and at least partially filling a width of the insulating carrier so that the first metal strip and the space form a female connector, a substantially rigid connector comprising an insulating sheath; a plurality of electrical conducting first through-prongs recessed within the insulating sheath; an insulator surrounding a mid-portion of each one of the plurality of first through-prongs so that each first through-prong is isolated from each other first through-prong; and a plurality of second conductive metal strips, one second metal strip extending along an entire length of each first through-prong and at least partially filling a width of each first through-prong so that the first through-prong forms a first male connector, in which the insulating casing and the connector plug in to each other so that one first metal strip electrically contacts one second metal strip.

### SUMMARY OF THE INVENTION

The above objects are achieved by the combination of features according to claim 1.

Accordingly, in one aspect, the invention provides an electrical junction box comprising a housing adapted for fastening said electrical junction box to a building structure, characterized by at least two conductive terminal strips insulatably attached to said housing, wherein each conductive terminal strip is adapted for conductively terminating an electrical cable, and wherein each of said at least two conductive terminal strips is insulated one from the other, at least one female connector in conductive communication with at least one conductive terminal strip and adapted to matingly and retentively engage a corresponding male connector, and, an electrical receptacle device having at least one male connector adapted to conductively connect said electrical receptacle device by matingly and retentively engaging a corresponding female connector.

Preferably, the at least two conductive terminal strips each have at least two terminal connecting lugs for conductively terminating an electrical cable, and wherein said at least two terminal connecting lugs are conductively connected in spaced apart relation along said conductive terminal strip. Each of said at least two conductive terminal strips is preferably insulated one from the other by a nonconductive barrier.

In a preferred embodiment, the box further comprises a security plate, having at least one aperture substantially corresponding to said at least one female connector, removably attached within said housing such that said security plate substantially encloses said at least two conductive terminal strips and said one female connector within said housing,

Preferably, the electrical junction box is adapted to terminate at least one set of low voltage cables for monitoring and/or controlling said electrical junction box.

In one embodiment, the terminal connecting lugs on the conductive terminal strips provide termination points for the wire strands contained in a standard 600V sheathed cable. In another preferred embodiment the housing comprises a rear panel including at least one mounting aperture adapted to receive fastener means for mounting said junction box to a building surface structure, a spaced, substantially parallel, opposed pair of side panels extending outward from and substantially perpendicular to said rear panel, a spaced, substantially parallel, opposed pair of end panels extending outward from and substantially perpendicular to said rear panel and bridging said side panels to provide a partially enclosed space therebetween, and at least one cable entry aperture formed through said end panels, wherein said at least two conductive terminal strips are insulatably attached to said rear panel of said housing, wherein each conductive terminal strip has at least two terminal connecting lugs attached in spaced apart relation along said conductive terminal strip for terminating electrical cable, and wherein each of said conductive terminal strips is insulated one from the other by a non-conductive barrier; and further comprising at least one set of low voltage cables terminating at said electrical junction box for monitoring and/or controlling said electrical junction box..

In accordance with one embodiment of the invention at least one outstanding female connector, conductively communicating with at least one conductive terminal strip, provides a plug-and-play electrical interface adapted to matingly and retentively engage a male connector on an electrical receptacle device which is adapted for electrically connecting an electrical appliance or fixture to the building electrical system through the junction box. The electrical receptacle device can be an electrical receptacle unit, such as an electrical outlet, an electrical switch, a switched outlet, a controlling device, or the like. Alternatively, the electrical receptacle device can be an electrical receptacle adaptor in the case of an electrical appliance or fixture such as a light fixture, a ceiling fan, or the like. In the latter case, the electrical receptacle adaptor is hardwired to the electrical appliance or fixture, and the male connector (or connectors) on the electrical receptacle device is (are) removably inserted into the corresponding female connector (or connectors) on the conductive terminal strips within the junction box. Thus, when the male connectors of an electrical receptacle device are matingly and retentively engaged with or inserted into the corresponding female connectors, the male connectors are conductively connected to the conductive terminal strips in the junction box housing, which thereby electrically connects the electrical receptacle device to a building's electrical power supply.

The junction box housing preferably is made from non-conductive material to which the conductive terminal strips are attached. The housing also can be made from conductive material, such as metal, which contains an insulating film or barrier along the rearward interior thereof to insulate the conductive terminal strips from the conductive housing.

In a preferred embodiment, the electrical junction box houses a set of at least three conductive terminal strips, including at least one electrically positive conductive terminal strip, at least one electrically negative conductive terminal strip, and at least one electrically neutral conductive terminal strip. In this preferred aspect, the junction box also has a corresponding set of at least three female connectors substantially aligned with each other and extending outwardly from the corresponding conductive terminal strips and adapted to removably, matingly, retentively, and conductively engage a corresponding set of at least three male connectors on an electrical receptacle device.

In another embodiment, the male connector on the electrical receptacle device is a single, medially insulated prong having a first side that is electrically positive and a second side that is electrically negative. !n this embodiment, the single, medially insulated prong is removably, matingly, retentively, and conductively engaged with or inserted into a corresponding, medially insulated, female connector having a first side in conductive communication with an electrically positive conductive terminal strip and a second side in conductive communication with an electrically negative conductive terminal strip. The first and second sides or conductive portions of the medially insulated female connector are separated by and proximate to the medial insulative barrier. Thus, a single female connector engages a single male connector, each of which carries both the positive side and the negative side of the circuit.

In another embodiment, the electrical receptacle device has two male connectors, wherein one of the male connectors or prongs is electrically negative, and the other male connector or prong is electrically positive. In this embodiment, the two male connectors are removably, matingly, retentively, and conductively engaged with or inserted into a corresponding set of two female connectors which conductively communicate with two corresponding conductive terminal strips. One of the conductive terminal strips is electrically positive, and the other conductive terminal strip is electrically negative.

In a preferred embodiment, a security plate having apertures substantially corresponding to the female connectors fits over the female connectors for removable attachment within the interior of the housing to provide a secure, substantially enclosed environment within the rear portion of the junction box. Thus, all open electrical contacts within the junction box are separated from the remaining portion of the electrical junction box.

In accordance with further embodiment of the invention, the housing contains at least one set of low voltage cables which preferably passes through the housing and terminates at a low voltage connector block. Preferably, the low voltage cables comprise two matched sets of cabling, one for control of the circuit and the second for monitoring activity therein. The low voltage connector block is adapted to receive a control/monitor pigtail from an electrical receptacle device mounted on and electrically and/or conductively connected to the electrical junction box, thereby facilitating a smart circuit communications path. When a control or monitor capable electrical receptacle device having a control/monitor pigtail is removably inserted into the junction box, the control/monitor pigtail removably interfaces with the low voltage connector block such that a "smart circuit" is capable of completion. In accordance with this embodiment, the housing is preferably partitioned to separate the low voltage cable and/or the low voltage connector block from the other components of the junction box. Preferably, the partition is a non-conductive, low voltage barrier. In a preferred aspect, the at least one set of low voltage cables is two sets of low voltage cables; a first set communicates data and information to the low voltage connector block and a second set is used for controlling and monitoring the electrical receptacle device or devices electrically and/or conductively connected to the junction box. In another preferred embodiment, the low voltage connector block is enclosed behind the above-described security plate and is therefore contained within a rearward side portion of the junction box. In this preferred aspect, the security plate further comprises at least one aperture that substantially corresponds to at least one aperture on the low voltage connector block that is adapted to receive the control/monitor pigtail. Thus, when the security plate encloses the low voltage connector block in a rearward side portion of the junction box housing, the control/monitor pigtail can removably and matingly engage the low voltage connector block through the security plate.

In accordance with a further embodiment of the invention, a plurality of electrical junction boxes, each electrically connected to particular electrical receptacle devices, can be wired in series. Embodiments of the present invention provide for identical wiring of all electrical receptacle devices capable of being connected to the improved junction box regardless of the type of electrical receptacle device. Each electrical device or unit may Include an identically wired electrical receptacle device having at least one male connector which is matingly engaged with or plugged into a corresponding female connector within an electrical junction box. In a preferred embodiment, each junction box is then wired in series with other similar junction boxes, providing for up to eight non-switch electrical receptacle devices on a single circuit. In a preferred embodiment, when the electrical junction boxes are wired in series, standard 600V sheathed cable enters the junction box through an end panel of the housing, connects to the conductive terminal strips by means of spaced apart lugs, and exits the junction box through an opposing end panel of the housing for continuation of the electrical circuit and connection to the next junction box in the series. Similarly, in another preferred embodiment, the low voltage cables enter the junction box through an end panel of the housing, connect to the low voltage connector block, and exit the junction box through an opposing end panel of the housing for continuation of the smart circuit and connection to the next junction box in the series.

Other objects, features, and advantages of the present invention will become apparent to those skilled in the art from the following detailed description, it should be understood, however, that the detailed description and specific examples, while indicating preferred embodiments of the present invention, are given for purposes of illustration and not of limitation. Many changes and modifications within the scope of the present invention may be made.

### BRIEF DESCRIPTION OF PREFERRED EMBODIMENTS

The above and further objects of the invention will become more readily apparent as the invention is more fully understood from the detailed description to follow, with reference being made to the accompanying drawings in which like reference numerals represent like parts throughout and in which:
FIG. 1 is a cross-sectional top view of the electrical junction box of the instant invention.
FIG. 2 is a frontal view of the electrical junction box of the instant invention without a security plate.
FIG. 3 is a high-level connectivity diagram showing a plurality of electrical junction boxes wired in series.

### DETAILED DESCRIPTION OF THE PREFERRED EMBODIMENTS

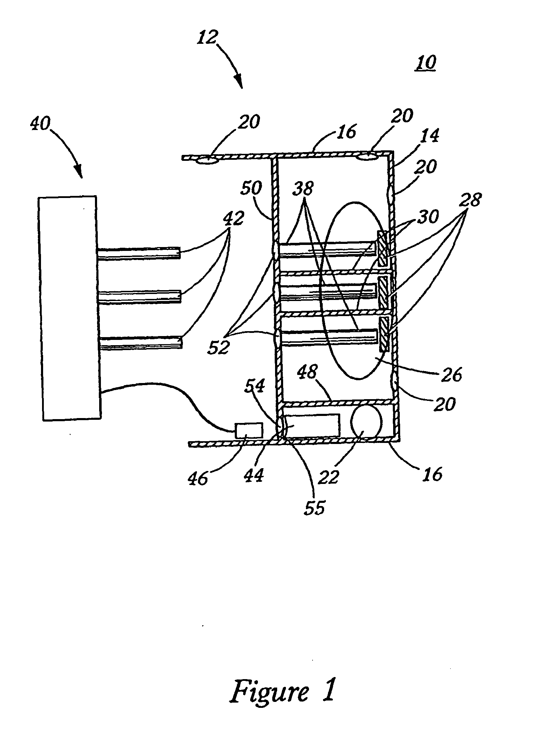

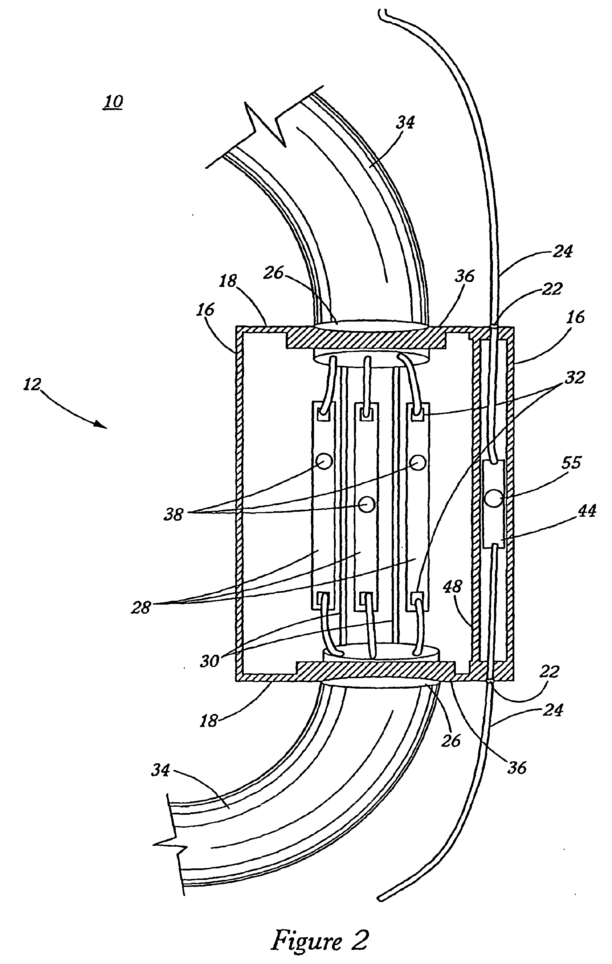

Turning now to FIGS. 1 and 2, the overall structure of the improved electrical junction box 10 is illustrated. As shown in the cross-sectional top view of FIG. 1, the improved electrical junction box 10 comprises a housing or box member 12 which further comprises a rear panel 14 which can be square, rectangular, or any other suitable shape. A spaced, substantially parallel, opposed pair of side panels 16 extends outward from and substantially perpendicular to said rear panel 14, and a spaced, substantially parallel, opposed pair of end panels 18 (shown in FIG. 2) extends outward from and substantially perpendicular to said rear panel 14 and bridges said side panels 16 to provide a partially enclosed space there between. There is at least one aperture or hole 20 in the rear panel 14 and/or in the side panels 16 adapted to receive fastener means for mounting the junction box 10 to a suitable surface of a building structure, such as a framing member or framing stud. These apertures may be formed through the rear panel 14 and/or the side panels 16 or may be formed as key hole tabs that extend from the peripheral edges of the rear panel 14 and/or the side panels 16. In a preferred aspect, at least one electrical wire or cable aperture or opening 22 (FIG. 2) is formed through each of the end panels 18, preferably disposed toward the rear panel 14 and near or along one side of the housing or box member 12, and adapted to receive electrical wires or cables, such as, for example, low voltage cable 24. As better seen in FIG. 2, cable is led into and exits the junction box 10 at cable entry/exit apertures 26 which are disposed toward the center of both end panels 18 of the box member 12.

The housing 12 of the electrical junction box 10 can be made of plastic or any other suitable, non-conductive material. As used in various commercial applications, the housing 12 also can be made of metal, can be fastened to the external surface of a wall or building structure, and can have electrical conduit enter and run through the housing 12. The fastener means for mounting the junction box to a building surface structure are preferably screws but can be any suitable fastener known and practiced by one of ordinary skill in the art.

The housing 12 of the instant junction box 10 contains a set of three conductive terminal strips 28 that are insulated one from the other by a non-conductive barrier 30. The non-conductive barrier 30 can be made of plastic or any other suitable material as known and practiced in the art. As better seen in FIG. 2, each conductive terminal strip 28 further comprises a pair of terminal connecting lugs 32 fixedly attached in spaced apart relation along the conductive terminal strip 28, which provides for the termination of standard 600V sheathed cable 34. Wire clamp means 36 adjacent the cable entry apertures 26 are fixedly attached to the end panels 18 for insuring that the standard 600V sheathed cable 34 is not inadvertently pulled out of the electrical junction box 10. As shown in FIG. 1, a set of three female connectors 38 provides a plug-and-play type interface to connect electrical receptacle device 40 to the conductive terminal strips 28 via male connectors 42. The electrical receptacle device 40 has a set of three male connectors 42 for removably inserting the electrical receptacle device 40 into the corresponding female connectors 38. The electrical receptacle device 40 can be, for example, an electrical outlet, an electrical switch, a switched electrical outlet, an electrical receptacle adaptor, or the like.

As illustrated in FIG. 2, in a preferred aspect of the instant electrical junction box 10, low voltage cable 24 enters the junction box 10 through electrical cable aperture 22 in end panel 18, terminates into low voltage connector block 44, and exits through cable aperture 22 in the opposing end panel 18 to provide a smart circuit communications path. As better seen in FIG. 1, if electrical receptacle device 40 is control or monitor capable, low voltage connector block 44 is adapted to interface removably with or removably receive a control/monitor pigtail 46 on electrical receptacle device 40 to complete a smart circuit through low voltage cable 24 (shown in FIG. 2). As better shown in FIG. 2, a non-conductive low voltage barrier 48 separates the low voltage connector block 44 from the other components in the remainder of the junction box 10, thereby separating all standard voltage cables 34 connected to the conductive terminal strips 28 from the low voltage cable 24 connected to the low voltage connector block 44. The non-conductive low voltage barrier 48 can be made of plastic or any other suitable material as known and practiced by one of ordinary skill in the art. A security plate 50 (shown in FIG. 1), having apertures 52 corresponding to the female connectors 38 and aperture 54 corresponding to an aperture or opening 55 in low voltage connector block 44, fits into the housing 12. The security plate 50 fits over, or in front of, the female connectors 38 and the low voltage connector block 44 and removably attaches to the side panels 16 and end panels 18 of the housing 12 to provide a secure, enclosed environment within the rear portion of the junction box 10 which thereby contains all open electrical contacts. The security plate 50 can be of any suitable non-conductive material or, in the case of a metal junction box, can be of suitably insulated conductive material, such as metal.

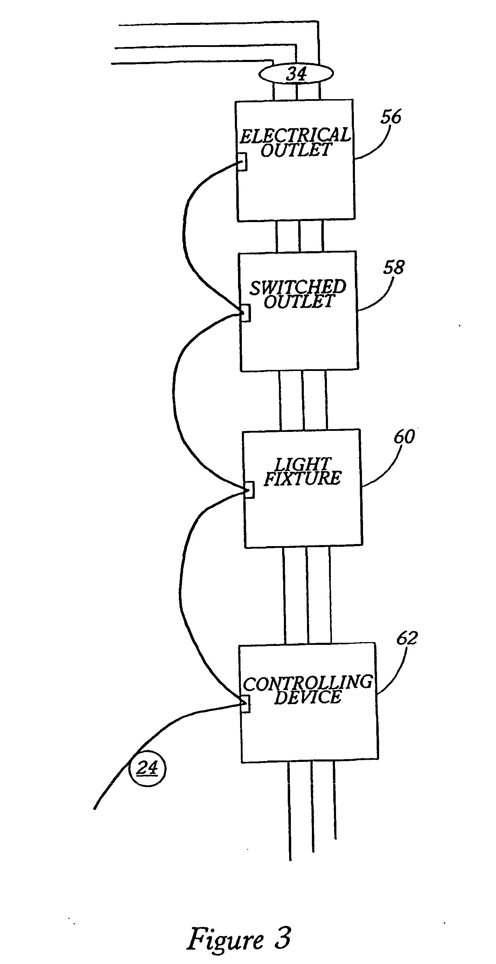

Referring next to FIG. 3, a high-level connectivity diagram shows a plurality of electrical receptacle devices wired in series. The instant electrical junction box provides that all electrical receptacle devices are similarly wired and are therefore capable of being inserted or plugged into the junction box, regardless of the type of electrical receptacle device. In a preferred embodiment, each identically wired electrical receptacle device is removably inserted or plugged into its respective junction box, which is wired in series and connected to up to eight non-switch electrical receptacle devices on a single circuit. As described above with reference to FIGS. 1 and 2, in this preferred embodiment, when a plurality of electrical junction boxes are wired in series, standard 600V sheathed cable 34 enters the junction box 10 through an end panel 18 of the housing 12, connects to the conductive terminal strips 28, and exits the junction box 10 through an opposing end panel 18 of the housing 12 for continuation of the electrical circuit and connection to the next junction box 10 in the series. In another preferred aspect, as described above with reference to FIGS. 1 and 2, low voltage cable 24 enters the junction box 10 through an end panel 18 of the housing 12, connects to the low voltage connector block 44, and exits the junction box 10 through the opposing end panel 18 of the housing 12 for continuation of the smart circuit and connection to the next junction box in the series.

As shown schematically in FIG. 3, examples of the variety of electrical receptacle devices that can be connected to the junction box and wired in series include a standard electrical outlet 56; a switched outlet 58; a light fixture 60; and a controlling device 62, such as for example a touch pad that is programmed to control both light fixture 60 and switched outlet 58 individually, or an electrical switch that is specifically programmed to control switched outlet 58. The standard voltage cable 34 passes through each electrical junction box in series, thereby providing electrical power to all of the electrical receptacle devices 56, 58, 60, and 62 on the circuit. Specific control of the electrical power provided to each electrical receptacle device, such as whether the electrical receptacle device is turned on or off, is managed by each electrical receptacle device individually. If an electrical receptacle device is a controllable device, such as for example on a switched outlet 58 or a light fixture 60, input from controlling device 62 is required to change the state (i.e., on/off) of the controllable switched outlet 58 or light fixture 60. Controlling device 62 is not hardwired to the electrical receptacle device that it controls, and control is independent of whether or not the electrical receptacle device being controlled is connected to a completed electrical circuit.

Although the present invention has been described with reference to preferred embodiments, including particular materials and size parameters, those skilled in the art will recognize that various modifications and variations to the same can be accomplished without departing from the scope of the present invention and that such modifications are clearly contemplated herein. No limitation with respect to the specific embodiments disclosed herein is intended nor should any be inferred.

## Claims

1. An electrical junction box (10) comprising:
a. a housing (12) adapted for fastening said electrical junction box (10) to a building structure;
**characterized by**:
b. at least two conductive terminal strips (28) insulatably attached to said housing (12), wherein each conductive terminal strip is adapted for conductively terminating an electrical cable (34), and wherein each of said at least two conductive terminal strips (28) is insulated one from the other;
c. at least one female connector (38) in conductive communication with at least one conductive terminal strip (28) and adapted to matingly and retentively engage a corresponding male connector (42); and,
d. an electrical receptacle device (40) having at least one male connector (42) adapted to conductively connect said electrical receptacle device (40) by matingly and retentively engaging a corresponding female connector (38).

2. A box according to claim 1, wherein said at least two conductive terminal strips (28) each have at least two terminal connecting lugs (32) for conductively terminating an electrical cable (34), and wherein said at least two terminal connecting lugs (32) are conductively connected in spaced apart relation along said conductive terminal strip (28).

3. A box according to either claim 1 or claim 2, wherein each of said at least two conductive terminal strips (28) is insulated one from the other by a nonconductive barrier (30).

4. A box according to any one of claims 1, 2 or 3, comprising a security plate (50), having at least one aperture (52) substantially corresponding to said at least one female connector (38), removably attached within said housing (12) such that said security plate (50) substantially encloses said at least two conductive terminal strips (28) and said one female connector (38) within said housing (12).

5. A box according to any preceding claim, wherein said electrical junction box (10) is adapted to terminate at least one set of low voltage cables (24) for monitoring and/or controlling said electrical junction box (10).

6. An electrical junction box according to claim 1, wherein:
the housing (12) comprises:
i. a rear panel (14) including at least one mounting aperture (20) adapted to receive fastener means for mounting said junction box to a building surface structure:
ii. a spaced, substantially parallel, opposed pair of side panels (16) extending outward from and substantially perpendicular to said rear panel (14):
iii. a spaced, substantially parallel, opposed pair of end panels (18) extending outward from and substantially perpendicular to said rear panel (14) and bridging said side panels (16) to provide a partially enclosed space therebetween; and
iv. at least one cable entry aperture (26) formed through said end panels (18);
wherein said at least two conductive terminal strips (28) are insulatably attached to said rear panel (14) of said housing (12), wherein each conductive terminal strip (28) has at least two terminal connecting lugs (32) attached in spaced apart relation along said conductive terminal strip (28) for terminating electrical cable (34), and wherein each of said conductive terminal strips (28) is insulated one from the other by a non-conductive barrier (30); and
further comprising at least one set of low voltage cables terminating at said electrical junction box (10) for monitoring and/or controlling said electrical junction box (10).

7. A box according to claim 6, further comprising a security plate (50), having at least one aperture (52) substantially corresponding to said at least one female connector (38), removably attached within said housing (12) such that said security plate (50) is positioned substantially parallel to said rear panel (14) and substantially perpendicular to said side panels (16) and end panels (18) and thereby substantially encloses said at least two conductive terminal strips (28) and said at least one female connector (38) within a rear portion of said housing (12).

8. A box according to any preceding claim, wherein said at least one male connector (42) is a single, medially insulated prong having a first side that is electrically positive and a second side that is electrically negative, and wherein the single, medially insulated prong removably, matingly, and retentively engages a corresponding medially insulated female connector (38) having a first side in conductive communication with an electrically positive conductive terminal strip and a second side in conductive communication with an electrically negative conductive terminal strip.

9. A box according to any one of claims 1 to 7, wherein said at least one male connector (42) comprises one electrically negative male connector and one electrically positive male connector, and wherein each of said male connectors removably, matingly, and retentively engages a corresponding female connector (38) which conductively communicates with a corresponding conductive terminal strip (28), and wherein one of said corresponding conductive terminal strips (28) is electrically negative and the other is electrically positive.

10. A box according to any one of claims 1 to 7, wherein said at least one male connector (42) comprises one electrically negative male connector, one electrically positive male connector, and one electrically neutral male connector, and wherein each of said male connectors removably, matingly, and retentively engages a corresponding female connector (38) which conductively communicates with a corresponding conductive terminal strip (28), and wherein one of said corresponding conductive terminal strips (28) is electrically positive, one is electrically negative, and one is electrically neutral,

11. A box according to any one of claims 5, 6 or 7, wherein said housing (12) is partitioned by a non-conductive, low voltage barrier (48) to separate said at least one set of low voltage cables (34) from other components of said junction box (10),

12. A box according to any one of claims 5, 6, 7 or 11, further comprising a low voltage connector block (44) attached to said housing (12) and adapted to terminate said at least one set of low voltage cables (34).

13. A box according to claim 12, wherein said low voltage connector block (44) further is adapted to receive a control/monitor pigtail (46) from an electrical receptacle device (40) mounted on and electrically connected to said electrical junction box (10).

14. A box according to any one of claims 5, 6, 7, 11, 12 or 13, wherein said electrical junction box (10) is adapted to terminate at least two sets of low voltage cables (34).

15. A box according to claim 14 when dependent on either one of claims 12 or 13, wherein said at least two sets of low voltage cables (34) comprise a first set of low voltage cables for communicating data and information to said low voltage connector block (44) and a second set of low voltage cables for controlling and monitoring at least one electrical receptacle device (40) conductively connected to said junction box (10).

16. A box according to either claim 4 or claim 7, wherein said security plate (50) further comprises at least one aperture (54) substantially corresponding to at least one aperture on a low voltage connector block (44) that is adapted to receive a control/monitor pigtail (46), and wherein said security plate (50) encloses said low voltage connector block (44) within said housing (12) and permits said control/monitor pigtail (46) to removably and matingly engage said low voltage connector block (44) through said security plate (50).

17. A box according to any preceding claim, wherein said electrical receptacle device (40) is selected from the group consisting of an electrical outlet (56), a switched electrical outlet (58), an electrical switch, and an electrical receptacle adaptor.

## Patentansprüche

1. Elektrische Verteilerdose (10) mit:
a. einem Gehäuse (12), das zur Befestigung der elektrischen Verteilerdose (10) an einer Gebäudestruktur ausgeführt ist;
**gekennzeichnet durch**:
b. mindestens zwei leitfähige Anschlussleisten (28), die isolierbar am Gehäuse (12) angebracht sind, wobei jede leitfähige Anschlussleiste zum leitfähigen Anschließen eines elektrischen Kabels (34) ausgeführt ist und wobei jede der mindestens zwei leitfähigen Anschlussleisten (28) gegenüber der anderen isoliert ist;
c. mindestens ein Buchsenteil (38), das In leitfähiger Verbindung mit mindestens einer leitfähigen Anschlussleiste (28) steht und so ausgeführt ist, dass es mit einem entsprechenden Steckerteil (42) passend und festhaltend in Eingriff steht; und
d. eine elektrische Steckervorrichtung (40) mit mindestens einem Steckerteil (42) zum leitfähigen Anschließen der elektrischen Steckervorrichtung (40), indem sie passend und festhaltend in ein entsprechendes Buchsenteil (38) eingreift.

2. Dose nach Anspruch 1, bei der die mindestens zwei leitfähigen Anschlussleisten (28) jeweils mindestens zwei Anschlussösen (32) zum leitfähigen Anschließen eines elektrischen Kabels (34) haben und bei der die mindestens zwei Anschlussösen (32) leitfähig in beabstandeter Beziehung entlang der leitfähigen Anschlussleiste (28) angeordnet sind.

3. Dose nach Anspruch 1 oder 2, bei der jede der mindestens zwei leitfähigen Anschlussleisten (28) gegenüber der anderen durch eine nicht leitfähige Isolierung (30) isoliert ist.

4. Dose nach einem der Ansprüche 1, 2 oder 3 mit einer Sicherheitsplatte (50), die mindestens eine Öffnung (52) hat, die im Wesentlichen mit dem mindestens einen Buchsenteil (38) übereinstimmt und herausnehmbar innerhalb des Gehäuses (12) so angebracht ist, so dass die Sicherheitsplatte (50) die mindestens zwei leitfähigen Anschlussleisten (28) und das eine Buchsenteil (38) innerhalb des Gehäuses (12) einschließt.

5. Dose nach einem der vorigen Ansprüche, bei der die elektrische Verteilerdose (10) zum Anschließen mindestens eines Satzes Niederspannungskabel (24) zum Überwachen und/oder Steuern der elektrischen Verteilerdose (10) ausgeführt ist.

6. Elektrische Verteilerdose nach Anspruch 1, bei der das Gehäuse (12) aufweist:
I, eine Rückwand (14) mit mindestens einer Anbauöffnung (20) zur Aufnahme von Befestigungsmitteln, um die Verteilerdose an einer Gebäudeoberflächenstruktur anzubauen;
II. ein beabstandetes im Wesentlichen paralleles Paar einander gegenüberliegender Seitenwände (16), die sich von der Rückwand (14) nach außen und im Wesentlichen senkrecht dazu erstrecken;
III. ein beabstandetes im Wesentlichen paralleles Paar einander gegenüberliegender Stirnwände (18), die sich von der Rückwand (14) nach außen und im Wesentlichen senkrecht dazu erstrecken und die Seitenwände (14) überbrücken, um dazwischen einen teilweise geschlossenen Raum bereitzustellen; und
IV. mindestens eine Kabeleinführöffnung (26), die durch die Stirnwände (18) ausgebildet ist,
bei der die mindestens zwei leitfähigen Anschlussleisten (28) isolierbar an der Rückwand (14) des Gehäuses (12) befestigt sind, bei der jede leitfähige Anschlussleiste (28) mindestens zwei Anschlussösen (32) hat, die in beabstandeter Beziehung entlang der leitfähigen Anschlussleiste (28) zum Anschließen eines elektrischen Kabels (34) angeordnet sind und bei der jede der leitfähigen Anschlussleisten gegenüber der anderen durch eine nicht leitfähige Isolierung (30) isoliert ist; und
ferner mindestens einen Satz Niederspannungskabel aufweist, die an der elektrischen Verteilerdose (10) zum Überwachen und/oder Steuern der elektrischen Verteilerdose (10) angeschlossen sind.

7. Dose nach Anspruch 6, ferner die Sicherheitsplatte (50) aufweisend, die mindestens eine Öffnung (52) hat, die im Wesentlichen mit dem mindestens einen Buchsenteil (38) übereinstimmt, herausnehmbar innerhalb des Gehäuses (12) so angebracht ist, dass die Sicherheitsplatte (50) im Wesentlichen parallel zur Rückwand (14) und im Wesentlichen senkrecht zu den Seitenwänden (16) und den Stirnwänden (18) angeordnet ist und dadurch im Wesentlichen die mindestens zwei leitfähigen Anschlussleisten (28) und das mindestens eine Buchsenteil (38) innerhalb eines hinteren Abschnitts des Gehäuses (12) einschließt.

8. Dose nach einem der vorigen Ansprüche, bei der das mindestens eine Steckerteil (42) ein einzelner mittig isolierter Stift mit einer ersten elektrisch positiven und einer zweiten elektrisch negativen Seite ist, und bei der der einzige mittig isolierte Stift herausnehmbar, passend und festhaltend mit einem entsprechenden mittig isolierten Buchsenteil (38) in Eingriff steht, das eine erste Seite hat, die in leitfähiger Verbindung mit einer elektrisch positiven leitfähigen Anschlussleiste und eine zweite Seite, die in leitfähiger Verbindung mit einer elektrisch negativen leitfähigen Anschlussleiste steht.

9. Dose nach einem der Ansprüche 1 bis 7, bei der das mindestens eine Steckerteil (42) ein elektrisch negatives Steckerteil und ein elektrisch positives Steckerteil aufweist, und bei der jedes der Steckerteile herausnehmbar, passend und festhaltend mit einem entsprechenden Buchsenteil (38) in Eingriff steht, das in leitfähiger Verbindung mit einer entsprechenden leitfähigen Anschlussleiste (28) steht, und bei der eine der entsprechenden leitfähigen Anschlussleisten (28) elektrisch negativ und die andere elektrisch positiv ist.

10. Dose nach einem der Ansprüche 1 bis 7, bei der das mindestens eine Steckerteil (42) ein elektrisch negatives Steckerteil, ein elektrisch positives Steckerteil und ein elektrisch neutrales Steckerteil aufweist, und bei der jedes der Steckerteile herausnehmbar, passend und festhaltend mit einem entsprechenden Buchsenteil (38) in Eingriff steht, das in leitfähiger Verbindung mit einer entsprechenden leitfähigen Anschlussleiste (28) steht, und bei der eine der entsprechenden leitfähigen Anschlussleisten (28) elektrisch positiv, eine elektrisch negativ und eine elektrisch neutral ist.

11. Dose nach einem der Ansprüche 5, 6 oder 7, bei der das Gehäuse (12) durch eine nicht leitfähige Niederspannungsisolierung (48) abgeteilt ist, um den mindestens einen Satz Niederspannungskabel (34) von anderen Bauteilen der Verteilerdose (10) zu trennen.

12. Dose nach einem der Ansprüche 5, 6, 7 oder 11, ferner einen Niederspannungs-Anschlussblock (44) aufweisend, der am Gehäuse (12) angeordnet und zum Anschließen des mindestens einen Satzes Niederspannungskabel (34) ausgeführt ist.

13. Dose nach Anspruch 12, bei der der Niederspannungs-Anschlussblock (44) des Weiteren so ausgeführt ist, dass er einen Anschlussdraht (46) zur Steuerung/Überwachung von einer elektrischen Steckervorrichtung (40) aufnimmt, die an der elektrischen Verteilerdose (10) angebracht und mit: ihr elektrisch verbunden ist.

14. Dose nach einem der Ansprüche 5, 6, 7, 11, 12 oder 13, bei der die elektrische Verteilerdose (10) zum Anschluss von mindestens zwei Satz Niederspannungskabel (34) ausgeführt ist.

15. Dose nach Anspruch 14, bei der sofern von einem der Ansprüche 12 oder 13 abhängig, die mindestens zwei Satz Niederspannungskabel (34) einen ersten Satz Niederspannungskabel zur Übertragung von Daten und Informationen an den Niederspannurigs-Anschlussblock (44) und einen zweiten Satz Niederspannungskabel zur Steuerung und Überwachung von mindestens einer elektrischen Steckervorrichtung (40) aufweist, die leitfähig mit der Verteilerdose (10) verbunden ist.

16. Dose nach Anspruch 4 oder 7, bei der die Sicherheitsplatte (50) ferner mindestens eine Öffnung (54) hat, die im Wesentlichen mindestens einer Öffnung am Niederspannungs-Anschlussblock (44) entspricht, der so ausgeführt ist, dass er einen Anschlussdraht (46) zur Steuerung/Überwachung aufnimmt, und bei der die Sicherheitsplatte (50) den Niederspannungs-Anschlussblock (44) im Gehäuse (12) einschließt und ermöglicht, dass der Anschlussdraht (46) zur Steuerung/Überwachung entfernbar und passend durch die Sicherheitsplatte (50) mit dem Niederspannungs-Anschlussblock (44) in Eingriff steht.

17. Dose nach einem der vorigen Ansprüche, bei der die elektrische Steckervorrichtung (40) aus einer Gruppe bestehend aus einer elektrischen Steckdose (56), einer Schaltersteckdose (58), einem elektrischen Schalter und einem Adapter für eine elektrische Steckervorrichtung gewählt wird.

## Revendications

1. Boîte de jonction électrique (10) comprenant :
a. un boîtier (12) adapté pour fixer ladite boîte de jonction électrique (10) sur une structure de bâtiment ;
**caractérisée par** :
b. au moins deux bandes de borne conductrice (28) fixées de manière isolée audit boîtier (12), dans laquelle chaque bande de borne conductrice est adaptée pour servir de terminaison conductrice à un câble électrique (34), et dans laquelle chacune desdites au moins deux bandes de borne conductrice (28) est isolée par rapport à l'autre ;
c. au moins un connecteur femelle (28) en communication conductrice avec au moins une bande de borne conductrice (28) et adapté pour s'engager par raccordement et par maintien avec un connecteur mâle correspondant (42) ; et
d. une prise électrique (40) ayant au moins un connecteur mâle (42) adapté pour se connecter de manière conductrice à ladite prise électrique (40) grâce à l'engagement par raccordement et par maintien d'un connecteur femelle correspondant (38).

2. Boîte selon la revendication 1, dans laquelle lesdites au moins deux bandes de borne conductrice (28) ont chacune au moins deux pattes de connexion de borne (32) pour servir de terminaison conductrice à un câble électrique (34), et dans laquelle au moins deux pattes de connexion de borne (32) sont connectées de manière conductrice suivant une relation écartée le long de ladite bande de borne conductrice: (28).

3. Boîte selon la revendication 1 ou la revendication 2, dans laquelle chacune desdites au moins deux bandes de borne conductrice (28) est isolée l'une de l'autre par une barrière non-conductrice (30).

4. Boîte selon l'une quelconque des revendications 1, 2 ou 3, comprenant une plaque de sécurité (50), ayant au moins une ouverture (52) correspondant substantiellement audit au moins premier connecteur femelle (38), fixé de manière amovible à l'intérieur dudit boîtier (12) de façon que ladite plaque de sécurité (50) englobe substantiellement lesdites au moins deux bandes de borne conductrice (28) et ledit connecteur femelle (38) à l'intérieur dudit boîtier (12).

5. Boîte selon l'une quelconque des revendications précédentes, dans laquelle ladite boîte de jonction électrique (10) est adaptée pour servir de terminaison à au moins un jeu de câbles basse tension (24) afin de surveiller et/ou de commander ladite boîte de jonction électrique (10).

6. Boîte de jonction électrique selon la revendication 1, dans laquelle :
le boîtier (12) comprend :
i. un panneau arrière (14) incluant au moins une ouverture de montage (20) adaptée pour recevoir des moyens de fixation pour le montage de ladite boîte de jonction sur une structure de surface de bâtiment ;
ii. une paire en vis-à-vis, écartée, substantiellement parallèle de panneaux latéraux (16) sortant dudit panneau arrière (14) et substantiellement parallèle à celui-ci ;
iii. une paire en vis-à-vis, écartée et substantiellement opposée, de panneaux d'extrémité (18) dépassant vers l'extérieur depuis ledit panneau arrière (14) et substantiellement parallèle à celui-ci et reliant lesdits panneaux latéraux (16) afin de fournir un espace partiellement fermé entre eux ; et
iv. au moins une ouverture d'entrée de câble (26) formée à travers lesdits panneaux d'extrémité (18) ;
dans laquelle lesdites au moins deux bandes de borne conductrice (28) sont fixées de manière isolée audit panneau arrière (14) dudit boîtier (12), dans laquelle chaque bande de borne conductrice (28) a au moins deux pattes de connexion de borne (32) fixées en relation espacée le long de ladite bande de borne conductrice (28) pour servir de terminaison à un câble électrique (34), et dans laquelle chacune desdites bandes de borne conductrice (28) est isolée l'une de l'autre par une barrière non-conductrice (30) ; et
comprenant en outre au moins un jeu de câbles basse tension s'achevant au niveau de ladite boîte de jonction électrique (10) pour surveiller et / ou commander ladite boîte de jonction électrique (10).

7. Boîte selon la revendication 6, comprenant en outre une plaque de sécurité (50), ayant au moins une ouverture (52) correspondant substantiellement audit au moins connecteur femelle (38), fixée de manière amovible à l'intérieur dudit boîtier (12) de sorte que ladite plaque de sécurité (50) soit positionnée substantiellement parallèle audit panneau arrière (14) et substantiellement perpendiculaire auxdits panneaux latéraux (16) et panneaux d'extrémité (18) et de ce fait englobe substantiellement lesdites au moins deux bandes de borne conductrice (28) et ledit au moins connecteur femelle (38) à l'intérieur d'une partie arrière dudit boîtier (12).

8. Boîte selon l'une quelconque des revendications précédentes, dans laquelle ledit au moins un connecteur mâle (42) est une seule languette de contact isolée par le milieu ayant un premier côté qui est électriquement positif et un second côté qui est électriquement négatif, et dans laquelle l'unique languette de contact isolée par le milieu s'engage de manière amovible, par raccordement et par maintien avec un connecteur femelle correspondant isolé par le milieu (38) ayant un premier côté en communication conductrice avec une bande de borne conductrice électriquement positive et un second côté en communication conductrice avec une bande de borne conductrice électriquement négative.

9. Boîte selon l'une quelconque des revendications 1 à 7, dans laquelle ledit au moins un connecteur mâle (42) comprend un connecteur mâle électriquement négatif et un connecteur mâle électriquement positif, et dans laquelle chacun desdits connecteurs mâles s'engage de manière amovible, par raccordement et par maintien avec un connecteur femelle correspondant (38) qui communique de manière conductrice avec une bande de borne conductrice correspondante (28), et dans laquelle une desdites bandes de borne conductrice correspondante (28) est électriquement négative et l'autre est électriquement positive.

10. Boîte selon l'une quelconque des revendications 1 à 7, dans laquelle ledit au moins un connecteur mâle (42) comprend un connecteur mâle électriquement négatif et un connecteur mâle électriquement positif, et dans laquelle chacun desdits connecteurs mâles s'engage de manière amovible, par raccordement et par maintien avec un connecteur femelle correspondant (38) qui communique de manière conductrice avec une bande de borne conductrice correspondante (28), et dans laquelle une desdites bandes de borne conductrice correspondante (28) est électriquement positive, une est électriquement négative et une est électriquement neutre.

11. Boîte selon l'une quelconque des revendications 5, 6 ou 7, dans laquelle ledit boîtier (12) est fractionné par une barrière non-conductrice, basse tension (48) pour séparer au moins un jeu de câbles basse tension (34) des autres composants de ladite boîte de jonction (10).

12. Boîte selon l'une quelconque des revendications 5, 6, 7 ou 11, comprenant en outre un bloc de connecteur basse tension (44) fixé audit boîtier (12) et adapté pour servir de terminaison audit au moins jeu de câbles basse tension (34).

13. Boîte selon la revendication 12, dans laquelle ledit bloc de connecteur basse tension (44) est en outre adapté pour recevoir une queue de cochon de commande /surveillance (46) d'une prise électrique (40) montée sur, et électriquement connectée à, ladite boîte de jonction électrique (10).

14. Boîte selon l'une quelconque des revendications 5, 6, 7, 11, 12 ou 13, dans laquelle ladite boîte de jonction électrique (10) est adaptée pour servir de terminaison à au moins deux jeux de câbles basse tension (34).

15. Boîte selon la revendication 14 dépendante de l'une des revendications 12 ou 13, dans laquelle lesdits au moins deux jeux de câbles basse tension (34) comprennent un premier jeu de câbles basse tension permettant de communiquer des données et une information audit bloc de connexion basse tension (44) et un deuxième jeu de câbles basse tension permettant de commander et de surveiller au moins une prise électrique (40) connectée de manière conductrice à ladite boîte de jonction (10).

16. Boîte selon la revendication 4 ou la revendication 7, dans laquelle ladite plaque de sécurité (50) comprend en outre une ouverture (54) correspondant substantiellement à au moins une ouverture sur un bloc de connecteur basse tension (44) qui est adaptée à recevoir une queue de cochon de commande / surveillance (46), et dans lequel ladite plaque de sécurité (50) englobe ledit bloc de connecteur basse tension (44) à l'intérieur dudit boîtier (12) et permet à ladite queue de cochon (46) de s'engager de manière amovible et par raccordement avec ledit bloc de connecteur basse tension (44) à travers ladite plaque de sécurité (50).

17. Boîte selon l'une quelconque des revendications précédentes, dans lequel ladite prise électrique (40) est sélectionnée à partir du groupe se composant d'une prise électrique (56), d'une prise électrique commutée (58), d'un commutateur électrique, et d'un adaptateur de prise électrique.
